# EUROPÄISCHE PATENTANMELDUNG

(11) **EP 0 813 291 A2**
(43) Veröffentlichungstag der Anmeldung: **17.12.1997**
(21) Anmeldenummer: 97109398.4
(22) Anmeldetag: 10.06.1997
(51) Int. Cl.: H02M 3/155, H04M 19/08

(54) **Schaltungsanordnung zur Spannungsumpolung in einem Mobilfunkgerät**

(30) Priorität: 14.06.1996 DE 19623829
(71) Anmelder: SIEMENS AKTIENGESELLSCHAFT, 80333 München (DE)
(72) Erfinder: Meier, Thomas, Dipl.-Ing., 80992 München (DE); Schöpf, Klaus-Jürgen, Dipl.-Ing.(FH), 85737 Ismaning (DE)

(57) **Zusammenfassung**

Schaltungsanordnung zum Erzeugen einer Ausgangsspannung (V-) mit einer gegenüber einem Bezugspotenial (P) ersten Polarität in einem mit einer Betriebsspannung (V+) mit einer gegenüber dem Bezugspotenial (P) zweiten Polarität versorgten Mobilfunkgerät, die über einen Schaltungseingangsanschluß (E2, E) mit einer Rufsignalgeber-Versorgungsspannung (V_{clk}) versorgt ist. Eine bevorzugte Ausführungsform arbeitet nach dem grundsätzlichen Funktionsprinzip, daß mittels einer Spannungsüberhöhung an einer Spule (L) nach deren Stromlosschalten ein erster Kondensator (C1) auf eine gegenüber dem festen Bezugspotential (P) positive Spannung aufgeladen wird. Während der Ein-Phase des Transistors lädt der erste Kondensator einen zweiten Kondensator (C2) auf eine gegenüber dem festen Bezugspotential (P) negative Spannung auf, die von außen abgreifbar ist.

## Beschreibung

Die Erfindung bezieht sich auf eine Schaltungsanordnung zur Spannungsumpolung in einem Mobilfunkgerät zum Erzeugen einer gegenüber einer Betriebsspannung umgepolten Ausgangsspannung.

Sie bezieht sich insbesondere auf eine Schaltungsanordnung, die in einem mit einer Batteriespannung versorgten Mobilfunkgerät (z. B. Mobiltelefon) aus einer gegenüber einem festen Bzugspotential positiven oder negativen Spannung eine negative bzw. positive Spannung erzeugt.

In mit einer positiven Batteriespannung versorgten Mobilfunkgeräten, die im allgemeinen einen oder mehrere MMIC(Monolithic Microwave Integrated Circuit)-Chips (z. B. einen MMIC-Leistungsverstärker) auf MESFET-Basis aufweisen, wird z. B. zum Betrieb der MESFETs eine negative Gate-Vorspannung benötigt. Bei einer bekannten Schaltungsvariante, mit der eine negative Spannung in einem batteriebetriebenen elektronischen Gerät erzeugt werden kann, wird mittels eines Oszillators oder Multivibrators eine Wechselspannung mit positiven und negativen Spannungsamplitugen erzeugt und nachfolgend gleichgerichtet. Bei einer anderen Schaltungsvariante wird durch Gleichrichtung eines am Eingang eines MMIC-Leistungsverstärkers anliegenden empfangenen Hochfrequenzsignals eine negative Spannung zu erzeugen.

Diese beiden Methoden weisen jedoch Nachteile auf. So wird bei der erstgenannten Möglichkeit durch den Oszillator in dem Mobilfunkgerät ein zusätzliches Wechselspannungssignal erzeugt, das die Betriebseigenschaften des Gerätes beeinträchtigen kann. Es können beispielsweise auf Signale Störspektren aufmoduliert werden oder benachbarte Bauelemente im Mobiltelfon wie beispielsweise Mikroprozessoren beeinflußt und folglich beeinträchtigt werden.

Bei der zweitgenannten Methode wirkt sich besonders nachteilig aus, daß der MMIC-Leistungsverstärker erst nach Anliegen des Hochfrequenzsignals eingeschaltet wird und nur bei relativ hohen Signalpegeln funktionsfähig ist.

Der vorliegenden Erfindung liegt daher die Aufgabe zugrunde, eine störungsarme Schaltungsanordnung der eingangs genannten Art zu entwickeln.

Diese Aufgabe wird durch eine Schaltungsanordnung mit den Merkmalen des Anspruches 1 gelöst. Vorteilhafte Weiterbildungen der erfindungsgemäßen Schaltungsanordnungen sind Gegenstand der Unteransprüche 2 bis 11.

Erfindungsgemäß ist an die Schaltungsanordnung zum Erzeugen einer Ausgangsspannung mit einer gegenüber einem festen Bezugspotenial ersten Polarität in einem mit einer Betriebsspannung mit einer gegenüber dem Bezugspotenial zweiten Polarität versorgten Mobilfunkgerät im Betrieb des Mobilfunkgeräts über einen Schaltungseingangsanschluß mit einer Rufsignalgeber-Versorgungsspannung in Form einer Wechselspannung oder getakteten Spannung, mit der ein in dem Mobilfunkgerät vorgesehener Rufsignalgeber bei einem ankommenden Anruf angesteuert wird, angelegt.

Die erfindungsgemäße Schaltungsanordnung ist besonders störungsarm, da sie keinen zusätzlichen Oszillator benötigt sondern die in einem Mobiltelfon bereits vorhandene Rufsignalgeber-Versorgungsspannung, die sogenannte Clock-Spannung, verwendet. Die Rufsignalgeber-Versorgungsspannung ist eine Wechselspannung oder eine getaktete Spannung, mit der der in einem Mobiltelefon vorhandene Rufsignalgeber bei einem ankommenden Anruf angesteuert wird.

Darüberhinaus hat die erfindungsgemäße Schaltungsanordnung den weiteren besonderen Vorteil, daß sie permanent eine gegenüber der Betriebsspannung umgepolte Ausgangsspannung liefert, weil die Rufsignalgeber-Versorgungsspannung in einem Mobilfunkgerät dauernd vorhanden ist.

Die erfindungsgemäße Schaltungsanordnung hat den besonderen Vorteil, daß Sie ohne großen Bauteileaufwand und daher mit geringem Platzaufwand realisierbar ist. Bis auf die Spule und die Kondensatoren können alle Komponenten auf einfache Weise auf einem einzigen MMIC-Chip integriert werden.

Für den Betrieb der erfindungsgemäßen Schaltungsanordnung ist kein zusätzlicher Oszillator notwendig. Die Betriebsspannung und die Rufsignalgeber-Versorgungsspannung stehen in einem Mobilfunkgerät meist bereits zur Verfügung und müssen nicht eigens für die Schaltungsanordnung erzeugt werden

Eine erste bevorzugte Ausführungsform der erfindungsgemäßen Schaltungsanordnung weist folgende Merkmale auf:
Zwischen einen ersten Anschluß einer Laststrecke eines Transistors, insbesondere einer Source-Drain-Strecke eines Feldeffekttransistors, und einen ersten Schaltungseingangsanschluß ist eine Spule gekoppelt und ein zweiter Anschluß der Laststrecke des Transistors ist mit einem festen Bezugspotential elektrisch leitend verbunden. Im Betrieb des Mobilfunkgeräts ist an den ersten Schaltungseingangsanschluß eine Betriebsspannung mit einer gegenüber dem Bezugspotential zweiten Polarität (z. B. positiv) anlegbar. Weiterhin ist ein Steueranschluß des Transistors über eine Steuerleitung an einen zweiten Schaltungseingangsanschluß gekoppelt, an den im Betrieb des Mobilfunkgeräts eine Rufsignalgeber-Versorgungsspannung anlegbar ist. Zwischen den ersten Anschluß der Laststrecke des Transistors und eine Kathode einer ersten Diode ist ein erster Kondensator gekoppelt und die Kathode der ersten Diode ist an eine Anode einer zweiten Diode gekoppelt. Eine Kathode der zweiten Diode ist an das feste Bezugspotential gekoppelt, während zwischen das feste Bezugspotential und eine Anode der ersten Diode ein zweiter Kondensator gekoppelt ist. Die Anode der ersten Diode ist mit einem Schaltungsausgangsanschluß verbunden, an dem eine Ausgangsspannung mit einer gegenüber dem festen Bezugspotential ersten Polarität (z. B. negativ) abgreifbar ist.

Diese Ausführungsform der erfindungsgemäßen Schaltungsanordnung arbeitet nach dem grundsätzlichen Funktionsprinzip, daß mittels einer Spannungsüberhöhung an der Spule nach einem Sperrendschalten des Transistors der erste Kondensator auf eine gegenüber dem festen Bezugspotential positive Spannung aufgeladen wird. Während einer Ein-Phase des Transistors lädt der erste Kondensator dann den zweiten Kondensator auf eine gegenüber dem festen Bezugspotential negative Spannung auf, die von außen abgreifbar ist.

Die Rufsignalgeber-Versorgungsspannung besteht beispielsweise aus Spannungsimpulsen mit einer gegenüber dem festen Bezugspotential zweiten Polarität, insbesondere aus einer Rechteckspannung.

Bei einer bevorzugten Weiterbildung der o. g. ersten Ausführungsform der erfindungsgemäßen Schaltungsanordnung ist als Rufsignalgeber-Versorgungsspannung eine Rechteckspannung verwendet. Dadurch können an der Spule vorteilhafterweise sehr hohe Spannungsüberhöhungen erzeugt werden, wodurch die Effizienz der Schaltungsanordnung verbessert werden kann.

Desweiteren ist bei einer bevorzugten Weiterbildung dieser Ausführungform der erfindungsgemäßen Schaltungsanordnung in die Steueranschlußleitung (Verbindung zwischen dem zweiten Schaltungseingangsanschluß und dem Steueranschluß) des Transistors ein Strombegrenzungswiderstand geschaltet, der verhindert, daß die Rufsignalgeber-Versorgungsspannung im Betrieb stark zusammenbricht.

Darüberhinaus kann in die Steuerleitung vorteilhafterweise ein dritter Kondensator geschaltet sein, der eine die Rufsignalgeber-Versorgungsspannung erzeugende Spannungsquelle gleichstrommäßig von der Schaltungsanordnung entkoppelt.

Bei einer weiteren vorteilhaften Weiterbildung der ersten Ausführungform der erfindungsgemäßen Schaltungsanordnung ist zwischen den ersten Schaltungseingangsanschluß und das feste Bezugspotential ein vierter Kondensator gekoppelt. Dadurch wird erreicht, daß eine die positive Betriebsspannung liefernde Spannungsquelle wechselstrommäßig von der Schaltungsanordnung entkoppelt ist.

Bei einer besonders bevorzugten Weiterbildung der ersten Ausführungsform der erfindungsgemäßen Schaltungsanordnung ist zwischen dem Schaltungsausgangsanschluß und der Steuerleitung des Transistors ein Rückkopplungswiderstand angeschlossen, über den der Steueranschluß des Transistors T mit einer negativen Spannung versorgt ist und der Transistor dadurch besonders stromsparend arbeiten kann.

Darüberhinaus kann auch zwischen dem zweiten Schaltungseingangsanschluß bzw. dem dritten Kondensator und dem festen Bezugspotential ein zusätzlicher elektrischer Widerstand angeschlossen sein. Dieser bewirkt vorteilhafterweise eine Stabilisierung des Potentials am Steueranschluß des Transistors gegenüber dem festen Bezugspotential.

Als Transistor kann vorteilhafterweise sowohl ein Feldeffekttransistor als auch ein Bipolartransistor verwendet sein.

Bei einer vereinfachten zweiten bevorzugten Ausführungsform einer erfindungsgemäßen Schaltungsanordnung ist gegenüber der oben angegebenen ersten bevorzugten Ausführungsform der Schaltungsanordnung der Transistor und die Spule sowie der erste Schaltungseingangsanschluß mit der Betriebsspannung weggelassen. Eine die Rufsignalgeber-Versorgungsspannung liefernde Spannungsquelle ist hier direkt mit einem ersten Anschluß des ersten Kondensator verbunden. Dieser wird im Betrieb auf eine Spannung mit einer gegenüber dem festen Potential zweiten Polarität aufgeladen, deren Wert höchstens dem Maximum der Rufsignalgeber-Versorgungsspannung enspricht. Diese vereinfachte Ausführungsform hat den beonderen Vorteil, daß sie mit einem äußerst geringen Bauteileaufwand herstellbar ist.

Der Begriff Mobilfunkgerät ist im Zusammenhang mit der vorliegenden Erfindung weit auszulegen. Hierunter sind alle mobilen elektronischen Geräte zu verstehen, die zum Empfangen von Nachrichten mittels elektromagnetischer Wellen geeignet sind.

Weitere Vorteile der erfindungsgemäßen Schaltungsanordnung ergeben sich aus den Unteransprüchen und aus den im folgenden beschriebenen Ausführungsbeispielen in Verbindung mit den Figuren 1 bis 6. Es zeigen:
Figur 1 ein Schaltbild eines ersten Ausführungsbeispieles einer erfindungsgemäßen Schaltungsanordnung,
Figur 2 eine schematische Darstellung eines Spannungs-Zeit-Diagramms einer Rufsignalgeber-Versorgungsspannung zur Steuerung des Transistors,
Figur 3 eine schematische Darstellung eines Spannungs-Zeit-Diagramms des Spannungsverlaufs an dem in Figur 1 mit I markierten Knoten der Schaltungsanordnung von Figur 1,
Figur 4 eine schematische Darstellung eines Spannungs-Zeit-Diagramms des Spannungsverlauf an dem in Figur 1 mit K markierten Knoten der Schaltungsanordnung von Figur 1,
Figur 5 ein Blockdiagramm der erfindungsgemäßen Schaltungsanordnung in Verbindung mit einem MMIC-Leistungsverstärker und
Figur 6 ein Schaltbild eines zweiten Ausführungsbeispieles einer erfindungsgemäßen Schaltungsanordnung.

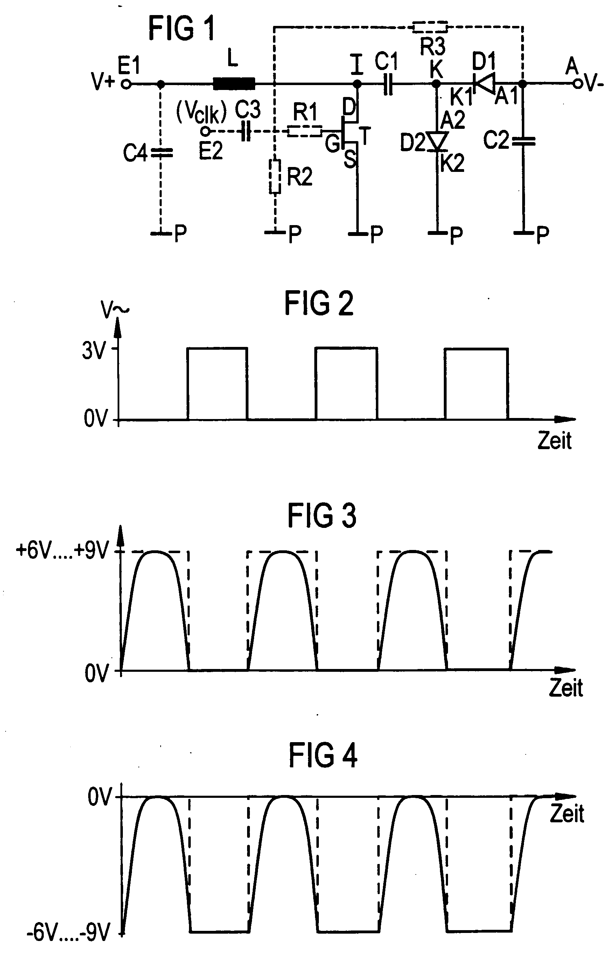

Bei der Schaltungsanordnung von Figur 1 ist ein Transistor T beispielsweise als Feldeffekttransistor realisiert. Zwischen einem Drainanschluß D (entspricht dem o. g. ersten Anschluß der Laststrecke) des Transistors T und einem ersten Schaltungseingangsanschluß E1, an dem eine positive Betriebsspannung V+ (z. B. +3V) anliegt, ist eine Spule L (z. B. mit einer Induktivität von 10µH) angeschlossen. Ein Sourceanschluß S (entspricht dem o. g. zweiten Anschluß der Laststrecke) des Transistors T ist mit einem festen Bezugspotential P (z. B. Masse) und ein Gateanschluß G (entspricht dem o. g. Steueranschluß) des Transistors T ist mit einem zweiten Schaltungseingangsanschluß E2 verbunden, an dem eine Rufsignalgeber-Versorgungsspannung V_{clk} (z. B. eine Rechteckspannung mit Rechteckimpulsen von +3V, man vgl. Figur 2) anliegt. Zwischen dem Drainanschluß D und einer Kathode K1 einer ersten Diode D1 ist ein erster Kondensator C1 (z. B. mit einer Kapazität von etwa 1nF) angeschlossen. Gleichzeitig ist die Kathode K1 der ersten Diode D1 mit einer Anode A2 einer zweiten Diode D2 und eine Kathode K2 der zweiten Diode D2 mit dem festen Bezugspotential P verbunden. Zwischen dem festen Bezugspotential P und einer Anode A1 der ersten Diode D1 ist ein zweiter Kondensator C2 (z. B. mit einer Kapazität von etwa 1nF) angeschlossen. Die Anode A1 der ersten Diode D1 ist mit einem Schaltungsausgangsanschluß A verbunden, an dem eine negative Spannung V- (bei den angegebenen Induktivitäts- und Kabazitätswerten ca. -6 bis -9V) abgreifbar ist.

Optional kann bei der Schaltungsanordnung von Figur 1 in die Gatezuleitung (Verbindung zwischen dem Gateanschluß G und dem zweiten Schaltungseingangsanschluß E2) ein Gatevorwiderstand R1 (Strombegrenzungswiderstand) mit beispielsweise R = 1 kΩ geschaltet sein (in Figur 1 gestrichelt eingezeichnet). Dieser verhindert ggf. ein starkes Zusammenbrechen der Rufsignalgeber-Versorgungsspannung V_{clk}.

Desweiteren kann zwischen das feste Bezugspotential P und den zweiten Schaltungseingangsanschluß E2 ein zusätzlicher elektrischer Widerstand R2 (z. B. R = 20 kΩ) gekoppelt sein (in Figur 1 gestrichelt eingezeichnet), der eine Stabilisierung des Gate(G)-Source(S)-Potentials des Transistors T bewirkt.

Zum gleichstrommäßigen Entkoppeln der Rufsignalgeber-Versorgungsspannungs(V_{clk})-Versorgung von der Schaltungsanordnung kann zwischen dem zweiten Schaltungseingangsanschluß E2 und dem Gateanschluß G bzw. dem Gatevorwiderstand R1 ein dritter Kondensator C3 (in Fig. 1 ebenfalls gestrichelt eingezeichnet) mit einer Kapazität von beispielsweise 1 nF angeschlossen sein.

Weiterhin kann zum Entkoppeln der Spule L von einer Betriebsspannungs(V+)-Versorgung zwischen dem ersten Schaltungseingangsanschluß E1 und dem festen Bezugspotential P ein vierter Kondensator C4 (in Fig. 1 wiederum gestrichelt eingezeichnet) mit einer Kapazität von beispielsweise 2 nF angeschlossen sein.

Außerdem kann zur Versorgung des Transistors T mit einer negativen Gatespannung zwischen dem Schaltungsausgangsanschluß A und dem Gateanschluß G bzw. dem Gatevorwiderstand R1 ein Rückkoppelwiderstand R3 angeschlossen sein (in Figur 1 gestrichelt eingezeichnet). Dadurch kann ein besonders stromsparender Betrieb der Schaltungsanordnung erzielt werden.

In Figur 2 ist ein Spannungs-Zeit-Diagramm für eine beispielhafte Rufsignalgeber-Versorgungsspannung V_{clk} dargestellt, wie sie zur Ansteuerung des Transistors T verwendet werden kann und in einem Mobilfunkgerät (z. B. Mobiltelefon) zur Verfügung steht. Auf der Abszisse ist die Zeit und auf der Ordinate ist eine Spannung V aufgetragen. Die Rufsignalgeber-Versorgungsspannung V_{clk} ist eine Rechteckspannung mit einer Impulshöhe von beispielsweise +3V gegenüber dem festen Bezugspotential P (z. B. Masse) und einer Frequenz von z. B. zwischen 5 und 15 Mhz und liegt am zweiten Schaltungseingangsanschluß E2 an.

Das in Figur 3 dargestellte Spannungs-Zeit-Diagramm stellt schematisch den Spannungsverlauf an dem mit I bezeichneten Knoten der in Figur 1 dargestellten Schaltungsanordnung dar. Auf der Abszisse ist analog zu Figur 2 die Zeit und auf der Ordinate eine Spannung V aufgetragen. Demgemäß liegt am Knoten I innerhalb den Impulspausen der Rufsignalgeber-Versorgungsspannung V_{clk} eine gegen das Bezugspotential P im Vergleich zur Betriebsspannung V+ erhöhte Spannung mit einem Maximum von etwa +6 bis +9V an. Während der Impulse liegt der Knoten I aufgrund des durchgeschalteten Transistors T auf dem festen Bezugspotential P. Die im Vergleich zur Betriebsspannung V+ erhöhte Spannung wird von einer beim Stromlosschalten der Spule L auftretenden Spannungsüberhöhung bewirkt, die den ersten Kondensator C1 auflädt. Der ideale Spannungsverlauf ist in Figur 3 gestrichelt eingezeichnet.

Das in Figur 4 dargestellte Spannungs-Zeit-Diagramm stellt schematisch den Spannungsverlauf an dem in Figur 1 mit K bezeichneten Knoten dar. Auf der Abszisse ist wiederum analog zu Figur 2 die Zeit und auf der Ordinate eine Spannung V aufgetragen. Innerhalb der Impulspausen der Rufsignalgeber-Versorgungsspannung V_{clk} liegt hier gegenüber dem festen Bezugspotential eine Spannung mit einem Maximum von etwa -6 bis -9V an. Diese wird dadurch erzeugt, daß bei durchgeschaltetem Transistor T und damit auf das feste Bezugspotential geschaltetem positivem Pol des ersten Kondensators C1, der zweite Kondensator C2 auf eine gegenüber dem festen Bezugspotential negative Spannung V- geladen wird. Der ideale Spannungsverlauf ist in Figur 3 wiederum gestrichelt eingezeichnet.

Am Schaltungsausgangsanschluß A ist im unbelasteten Zustand eine reine Gleichspannung von etwa -6 bis -9 V abgreifbar.

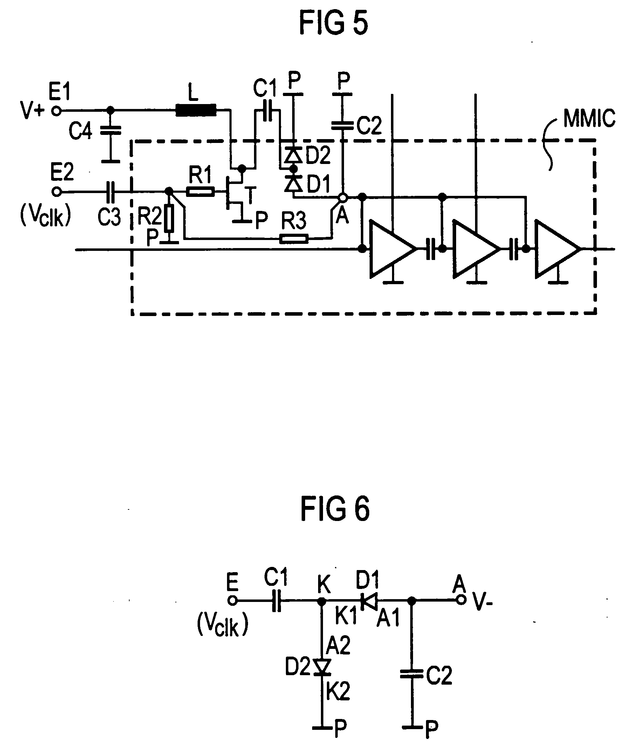

Bei dem in Figur 5 dargestellten Blockdiagramm der erfindungsgemäßen Schaltungsanordnung in Verbindung mit einem MMIC-Leistungsverstärkerchip MMIC mit drei Verstärkerstufen V1, V2, V3 ist zu erkennen, daß der Transistor T, die Dioden D1 und D2 und ggf. der erste, der zweite und/oder der dritte elektrische Widerstand R1, R2, R3 auf dem MMIC-Leistungsverstärkerchip MMIC integriert sind. Die Spule L, der erste und der zweite Kondensator C1,C2 sowie ggf. der dritte und der vierte Kondensator C3,C4 sind außerhalb des MMIC-Leistungsverstärkerchips MMIC angeordnet.

Die in Figur 6 dargestellte Schaltungsanordnung unterscheidet sich von der oben in Bezug auf Figur 1 beschriebenen dadurch, daß die Spule L und der Transistor T sowie die positive Betriebsspannung V+ weggelassen sind und ein Anschluß E des erste Kondensator C1 an die Rufsignalgeber-Versorgungsspannung V_{clk} angekoppelt ist. Die Spannungsverläufe am Anschluß E des ersten Kondensators und am Knoten K entsprechen prinzipiell den oben in Bezug auf die Figuren 3 und 4 erläuterten Spannungsverläufen am Knoten I bzw. K, jedoch mit betragsmäßig geringeren Spannungswerten.

Diese Schaltungsanordnung von Figur 6 eignet sich insbesondere zur Verwendung in einem Mobilfunkgerät (Mobiltelefon), falls keine gegenüber der positiven Betriebsspannung V+ betragsmäßig erhöhte negative Spannung V- benötigt wird.

## Patentansprüche

1. Schaltungsanordnung zum Erzeugen einer Ausgangsspannung (V-) mit einer gegenüber einem Bezugspotenial (P) ersten Polarität in einem mit einer Betriebsspannung (V+) mit einer gegenüber dem Bezugspotenial (P) zweiten Polarität versorgten Mobilfunkgerät, bei der ein Schaltungseingangsanschluß (E2, E) für eine Rufsignalgeber-Versorgungsspannung (V_{clk}) in Form einer Wechselspannung oder getakteten Spannung, mit der ein in dem Mobilfunkgerät vorgesehener Rufsignalgeber bei einem ankommenden Anruf angesteuert wird, vorgesehen ist.

2. Schaltungsanordnung nach Anspruch 1, bei der:
a) zwischen einen ersten Anschluß (D) einer Laststrecke eines Transistors (T) und einen ersten Schaltungseingangsanschluß (E1) für die Betriebsspannung (V+) eine Spule (L) gekoppelt ist,
b) ein zweiter Anschluß (S) der Laststrecke des Transistors (T) an ein festes Bezugspotential (P) gekoppelt ist,
c) ein Steueranschluß (G) des Transistors (T) an einen zweiten Schaltungseingangsanschluß (E2) für die Rufsignalgeber-Versorgungsspannung (V_{clk}) gekoppelt ist,
d) zwischen den ersten Anschluß (D) der Laststrecke des Transistors (T) und eine Kathode (K1) einer ersten Diode (D1) ein erster Kondensator (C1) gekoppelt ist,
e) die Kathode (K1) der ersten Diode (D1) an eine Anode (A2) einer zweiten Diode (D2) gekoppelt ist,
f) eine Kathode (K2) der zweiten Diode (D2) an das feste Bezugspotential (P) gekoppelt ist,
g) zwischen das feste Bezugspotential (P) und eine Anode (A1) der ersten Diode (D1) ein zweiter Kondensator (C2) gekoppelt ist und
h) die Anode (A1) der ersten Diode (D1) mit einem Schaltungsausgangsanschluß (A) für die Ausgangsspannung (V-) verbunden ist.

3. Schaltungsanordnung nach Anspruch 1 oder 2, bei der zwischen dem ersten Schaltungseingangsanschluß (E1) und dem festen Bezugspotential (P) ein dritter Kondensator (C3) angeschlossen ist.

4. Schaltungsanordnung nach einem der Ansprüche 1 bis 3, bei der vor den Steueranschluß (G) des Transistors (T) ein Strombegrenzungswiderstand (R1) geschaltet ist.

5. Schaltungsanordnung nach einem der Ansprüche 1 bis 4, bei der zwischen dem zweiten Schaltungseingangsanschluß (E2) und dem festen Bezugspotential (P) ein zusätzlicher elektrischer Widerstand (R2) angeschlossen ist.

6. Schaltungsanordnung nach einem der Ansprüche 1 bis 5, bei der zwischen den Schaltungsausgangsanschluß (A) und den Steueranschluß (G) des Transistors (T) ein Rückkopplungswiderstand (R3) gekoppelt ist.

7. Schaltungsanordnung nach einem der Ansprüche 1 bis 6, bei der der Transistor (T), die erste und die zweite Diode (D1, D2) auf einem einzigen MMIC-Chip (MMIC) integriert sind.

8. Schaltungsanordnung nach Anspruch 4, 5 oder 6, bei der der Transistor (T), die erste und die zweite Diode (D1, D2), der Strombegrenzungswiderstand (R1) auf einem einzigen MMIC-Chip (MMIC) integriert sind.

9. Schaltungsanordnung zum Erzeugen einer Ausgangsspannung (V-) mit einer gegenüber einem Bezugspotenial (P) ersten Polarität in einem mit einer Betriebsspannung (V+) mit einer gegenüber dem Bezugspotenial (P) zweiten Polarität versorgten Mobilfunkgerät, bei der:
a) ein erster Anschluß (E) eines ersten Kondensators (C1) für eine Rufsignalgeber-Versorgungsspannung (V_{clk}) in Form einer Wechselspannung oder getakteten Spannung, mit der ein in dem Mobilfunkgerät vorgesehener Rufsignalgeber bei einem ankommenden Anruf angesteuert wird, vorgesehen ist,
b) ein zweiter Anschluß des ersten Kondensators (C1) mit einer Kathode (K1) einer ersten Diode (D1) verbunden ist,
c) die Kathode (K1) der ersten Diode (D1) mit einer Anode (A2) einer zweiten Diode (D2) verbunden ist,
d) eine Kathode (K2) der zweiten Diode (D2) mit dem Bezugspotential (P) verbunden ist,
e) eine Anode (A1) der ersten Diode (D1) mit einem ersten Anschluß eines zweiten Kondensators (C2) verbunden ist,
f) ein zweiter Anschluß des zweiten Kondensators (C2) mit dem Bezugspotential (P) verbunden ist und
g) der erste Anschluß des zweiten Kondensators (C2) mit einem Schaltungsausgangsanschluß (A) verbunden ist.

10. Schaltungsanordnung nach einem der Ansprüche 1 bis 9, bei der die Rufsignalgeber-Versorgungsspannung (V∼) eine aus Spannungsimpulsen mit einer gegenüber dem Bezugspotential (P) zweiten Polarität bestehende Rechteckspannung ist.

11. Schaltungsanordnung nach einem der Ansprüche 1 bis 10, bei der die erste und die zweite Diode (D1, D2) auf einem einzigen MMIC-Chip (MMIC) integriert sind.
